(19) Europäisches Patentamt
European Patent Office
Office européen des brevets

(11) Publication number: **0 181 642 B1**

(12) # EUROPEAN PATENT SPECIFICATION

(45) Date of publication of patent specification: **08.02.89**

(51) Int. Cl.$^4$: **C 08 G 61/08**

(21) Application number: **85114486.5**

(22) Date of filing: **14.11.85**

(54) **Catalyst composition for polymerization of cycloolefins.**

(30) Priority: **16.11.84 US 672423**

(43) Date of publication of application:
**21.05.86 Bulletin 86/21**

(45) Publication of the grant of the patent:
**08.02.89 Bulletin 89/06**

(84) Designated Contracting States:
**BE DE FR GB IT NL SE**

(56) References cited:
**EP-A-0 094 626**
**FR-A-2 070 802**

(73) Proprietor: **HERCULES INCORPORATED**
**Hercules Plaza**
**Wilmington Delaware 19894 (US)**

(72) Inventor: **Martin, Andrea Elizabeth**
**R.D. 1, Box 121B**
**Avondale Pennsylvania 19311 (US)**

(74) Representative: **Lederer, Franz, Dr. et al**
**Van der Werth, Lederer & Riederer**
**Patentanwälte Lucile-Grahn-Strasse 22**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 181 642 B1

## Description

This invention relates to a catalyst composition comprising $WOCl_4$ and $WCl_6$ suitable for use in the bulk polymerization of norbornene-type cycloolefins, particularly dicyclopentadiene, with a metathesis-catalyst system.

Unless otherwise specified, the term "norbornene-type" is used herein to refer to cycloolefins having a strained five-membered ring structure, such as that of norbornene or dicyclopentadiene.

U.S. Patent No. 4,400,340 discloses a process for making a thermoset cross-linked poly(dicyclopentadiene) by a reaction injection molding process (sometimes hereinafter referred to as a RIM process), that uses either a tungsten halide or a tungsten oxyhalide in a metathesis-catalyst system. (The RIM process involves the mixing of two or more low viscosity reactive streams, which are then injected into a mold where they quickly set up into a solid infusible mass).

In the process of that patent, the tungsten-containing catalyst is preferably $WCl_6$ or $WOCl_4$ which is activated by an alkylaluminum compound. The alkylaluminum compound can be a trialkylaluminum, an alkylaluminum dihalide or a dialkylaluminum halide, in which the alkyl group contains one to ten carbon atoms. The preferred alkylaluminum compound is tri-n-octylaluminum.

Other U.S. Patents that disclose the use of either $WCl_6$ or $WOCl_4$ in a two-part metathesis catalyst to produce substantially thermoset dicyclopentadiene homopolymer or copolymers of dicyclopentadiene with cyclopentene are 4,436,858, 4,458,037, 4,469,809, 4,481,344, and 4,485,208.

The tungsten-containing catalyst used in these known metathesis-catalyst polymerizations is disclosed as being preferably in solution with dicyclopentadiene monomer. Because the tungsten compound, if unmodified, will rapidly polymerize the monomer, the tungsten compound is first suspended in a small amount of a suitable solvent that does not react with the tungsten compound. Disclosed examples of preferred solvents are benzene, toluene, xylene, chlorobenzene, dichlorobenzene, and trichlorobenzene. The tungsten compound concentration is between about 0.1 and 1.0 mole per liter of solution.

The tungsten compound is solubilized by the addition of a small amount of an alcoholic or phenolic compound. Suitable examples of the preferred phenolic compounds are phenol, alkylphenols, and halogenated phenols, with tert-butylphenol, tert-octylphenol and particularly nonylphenol being most preferred. The preferred molar ratio of tungsten compound to phenolic compound is from about 1:1 to about 1:3.

The solution can be made by adding the phenolic compound to a slurry of the tungsten compound in an organic solvent, stirring the solution and then blowing a stream of a dry inert gas through the solution to remove any hydrogen chloride.

To prevent premature polymerization of the tungsten compound/monomer solution, which would occur within a matter of hours, from about 1 to about 5 moles of a Lewis base or a chelating agent per mole of tungsten compound should be added. Preferred chelants include acetylacetone (acac), alkyl acetoacetates, where the alkyl group contains from one to ten carbon atoms; preferred Lewis bases are nitriles and ethers such as benzonitrile and tetrahydrofuran. When this catalyst solution is added to a purified cycloolefin such as dicyclopentadiene, the solution formed is stable and has a shelf-life of several months.

The activator also is preferably in solution with dicyclopentadiene monomer.

Dicyclopentadiene that is commercially available is *endo*-DCPD (3a,4,7,7a tetrahydro-4,7-methanolH-indene). The highest purity in the commercial grade of monomer, 97% by weight dicyclopentadiene, is unacceptable for polymerization without purification. The low boiling fraction should be removed. This can be done by stripping away several percent of the unsaturated four to six carbon atom volatiles, i.e., the volatiles distilled below 100°C at about 90 ± 3 torr absolute pressure. It is often desirable to purify the starting material even further by treatment with an absorbent such as a moelcular sieve, alumina or silica gel. The water content of the starting material should be below about 100 ppm. Water can be removed by azeotropic distillation under reduced pressure.

In these known metathesis-catalyst systems, the period of time between mixing catalyst, activator and monomer, and the exotherm that indicates the onset of polymerization, is known as the induction time. If an unmodified solution of the activator in monomer is mixed with the catalyst/monomer solution, the polymerization will initiate spontaneously and instantaneously, causing the polymer to set up in the mixing head. The onset of polymerization must be delayed by adding a reaction rate moderator to the activator monomer solution.

Ethers, esters, ketones, and nitriles can act as moderators for the alkylaluminum compounds. The induction time can be controlled by varying the amount of rate moderator used. The preferred moderator is bis(2-methoxyethyl) ether in a molar ratio of the alkylaluminum to moderator from about 1:1.5 to about 1:5.

When a moderator such as bis(2-methoxyethyl) ether is used, and the activator is a trialkylaluminum, the moderator should be added before the trialkylaluminum is added, preferably in a molar ratio of trialkylaluminum to bis(2-methoxyethyl) ether of at least 1:0.5, more preferably of about 1:1 to about 1:4.

The induction time, as well as the completeness of the polymerization, is also affected by the efficiency of the catalyst used in the polymerization.

As already indicated, a number of U.S. Patents disclose polymerization processes that use either a tungsten halide or a tungsten oxyhalide in a metathesis-catalyst system. However, the comparative

efficiency of commercially-available $WCl_6$ as the catalyst in a metathesis-catalyst system appears to vary substantially and unpredictably, so that it cannot be depended on to give uniform polymerization results, and the efficiency of $WOCl_4$ as an alternative is not as high as could be wished.

It would be desirable to provide means for making a $WCl_6$ catalyst that would be uniformly and reproducibly effective in a metathesis-catalyst system for polymerizing norbornene-type cycloolefins, particularly dicyclopentadiene.

It has now been discovered that the presence and amount of impurities such as oxygenated derivatives resulting from hydrolysis strongly influence the efficiency of the catalyst, and are responsible for unpredictable variations in effectiveness of commercial grades of $WCl_6$.

It is well-known, for instance from Durrant, P. J. & B. in *Introduction to Advanced Inorganic Chemistry,* Wiley, New York, 1970, pp. 1040—1041, that $WOCl_4$ is formed by the action of moisture or oxygen on $WCl_6$, and is converted into $WO_3$ in the presence of excess moisture.

According to the invention, a process for preparing a catalyst composition containing $WCl_6$ and suitable for use in the bulk polymerization of norbornene-type cycloolefins, is characterized in that $WCl_6$ is reacted with a controlled and limited proportion of oxygen from an oxygen donor to form a mixture comprising $WOCl_4$ and $WCl_6$ in a molar ratio of $WOCl_4$ to $WCl_6$ of from about 1:9 to about 2:1 (i.e., about 10—67% $WOCl_4$ to about 90—33% $WCl_6$), the amount of the oxygen donor material being insufficient to promote substantial formation of $WO_2Cl_2$ or $WO_3$.

Preferred oxygen donors include t-butanol, a mixture of carrier gas such as nitrogen and water vapor, a hydrated inorganic salt such as $FeSO_4.7H_2O$, and a wet "molecular sieve", i.e., an aluminum-silicon inorganic polymer that will hold and release moisture in a controlled manner. Most preferably the oxygen donor material is t-butanol.

The proportion of oxygen donor normally should be up to about 0.5 mole of oxygen per mole of tungsten, preferably about 0.1 mole to about 0.5 mole, and most preferably about 0.25 mole. Inactivation of the catalyst product may occur if overexposure to oxygen-donor material is permitted. Oxidation products that are inactive for cycloolefin polymerization are $WO_2Cl_2$ and $WO_3$. The reaction is complicated by the fact that $WOCl_4$, while more stable than $WCl_6$, is still susceptible to hydrolysis as shown in reactions (II) and (III):

$$\text{(I)}\quad WCl_6 + H_2O \rightarrow WOCl_4 + 2HCl$$
$$\text{(II)}\quad WOCl_4 + H_2O \rightarrow WO_2Cl_2 + 2HCl$$
$$\text{(III)}\quad WO_2Cl_2 + H_2O \rightarrow WO_3 + 2HCl$$

Also according to the invention, a catalyst composition containing $WCl_6$ for use in the bulk polymerization of norbornene-type cycloolefins, is characterized in that it comprises $WOCl_4$ and $WCl_6$ in a molar ratio of $WOCl_4$ to $WCl_6$ of from about 1:9 to 2:1.

The efficiency of the catalyst composition prepared by the process according to the invention is not only reproducibly uniform, but is also substantially greater than that of either $WCl_6$ or $WOCl_4$ when used individually in its pure form, and demonstrates a synergistic effect. For example, when either $WCl_6$ or $WOCl_4$ is omitted from the catalyst formulation described according to the invention, no evidence for metathesis polymerization of dicyclopentadiene is seen within a five minute period. However, when a 3:1 $WCl_6$:$WOCl_4$ mixture is prepared by reacting 0.25 equivalent t-butanol with the $WCl_6$, dicyclopentadiene is exothermically polymerized to a hard polymer within 45 seconds.

As used herein, unless otherwise specified, percentage of materials are in percent by weight and "solvent" means a fluid in which the catalyst is readily soluble.

The controlled hydrolysis of $WCl_6$ using a carrier gas such as nitrogen and water vapor as the oxygen donor is one effective procedure for carrying out the process according to the invention. The gaseous donor mixture is prepared by passing the dry carrier gas through the appropriate volume of water in a feed container, the water preferably being premixed with a solvent for $WCl_6$, such as toluene, so that the gas is also saturated with solvent vapor.

Preferably, nitrogen gas is passed through the water and solvent mixture, and the wet gas is carried to a point beneath or slightly above the surface of a stirred mixture of $WCl_6$ and the solvent (preferably a 0.1 to 0.5 molar solution of $WCl_6$ in the toluene) contained in a closed mixing vessel under an inert atmosphere. By proportioning the amount of water in the feed container to the amount of $WCl_6$ in the mixing vessel, oxygen addition from the water to the $WCl_6$ to form the product is controlled, using the theoretical basis of the above-mentioned hydrolysis reaction I.

The molar ratio of water to $WCl_6$ is preferably from 0.1 to 0.5, most preferably about 0.25. During the addition, a small amount of precipitate forms and the blue-purple solution gains a very faint reddish tint. After the addition of water is complete, one equivalent each of a phenolic compound (with nonyl phenol being most preferred) and acetylacetone (acac) are added to respectively solubilize and stabilize the catalyst. The phenolic compound can be added to the $WCl_6$ before the addition of water if that is more convenient.

Another effective procedure for carrying out the process according to the invention uses a hydrated inorganic salt, such as $FeSO_4.7H_2O$, as the oxygen donor. The salt is crushed to a powder. The $WCl_6$ solution in toluene is then added, the mixture is allowed to stir for an hour, and the solution is decanted away from the salt. The nonyl phenol and acetylacetone (acac) are added after the decanting step.

The preferred procedure for preparing the catalyst by the process according to the invention uses tert-butanol (BuOH) as the oxygen donor. The BuOH is added to the $WCl_6$ solution in toluene at a molar ratio of BuOH to tungsten that is preferably from 0.10 to 0.5, most preferably from 0.25 to 0.50. As noted for the procedure using a wet carrier gas, a precipitate forms during the addition and the solution gains a reddish tint. After the reaction with BuOH is complete, one equivalent each of a phenolic compound (with nonyl phenol being most preferred) and acetylacetone (acac) are added to respectively solubilize and stabilize the catalyst.

The reaction of $WCl_6$ with BuOH to form $WOCl_4$ is shown in the following equation:

$$WCl_6 + t\text{-}BuOH \xrightarrow[\text{toluene}]{} WOCl_4 + 2\ HCl + \text{butyltoluene}$$

When less than one equivalent of BuOH is used, a mixture of $WCl_6$ and $WOCl_4$ results. This reaction has been confirmed by a number of experiments. The release of 2 moles of HCl for each mole of BuOH has been demonstrated experimentally by trapping the sparged gas in water and titrating the acid. Butyltoluene has been identified by gas chromatography/mass spectrometry. The presence of $WOCl_4$ in a mixture of 1.0 $WCl_6$ and 0.25 t-BuOH is confirmed by the infrared spectrum of the mixture, which is identical to that of an authentic mixture of $WCl_6$ and $WOCl_4$ in an 80/20 mole ratio.

The following working examples exemplify the methods and products according to the invention.

Example 1

Under an inert atmosphere, pure tungsten hexachloride (0.71 g, 1.8 mmole) is mixed with dry toluene (3.6 ml) to give a 0.5 M suspension. To the slurry is added t-butanol (0.04 ml) to give a 0.25/1.0 mole ratio with tungsten. After stirring and sparging with nitrogen to remove the byproduct HCl, nonylphenol (1.08 ml of a 2.0 M toluene solution) is added. Next, acetylacetone (2,4-pentanedione, 0.37 ml) is added. The mixture is then sparged for at least one hour to remove HCl. Solvent losses by evaporation are made up. The product has a $WCl_6$/t-BuOH/nonylphenol/acetylacetone mole ratio of 1.0/0.25/1.2/2.0.

This solution is used to polymerize dicyclopentadiene (DCPD) as follows. A test tube is charged with 5 ml purified DCPD under an inert atmosphere. To this is added 0.16 mol of a 0.35 M toluene solution of an 85/15 (mole %) mixture of tri-n-octylaluminum (TNOA) and di-n-octylaluminum iodide (DOAI), also containing bis-2-methoxyethylether (diglyme) in a 1/1 mole ratio with aluminum. Next is added 0.04 ml of the 0.5 M catalyst solution described above. A thermocouple is used to record the temeprature rise with a strip chart recorder. The DCPD gels rapidly and then exothermically polymerizes. The exotherm (the difference between the initial and maximum temperatures) is 165 degrees C, and the cure time (time to reach half of the maximum temperature) is 45 seconds. This example illustrates a preferred embodiment of the invention.

Comparison Example 2

The procedure for preparation of the catalyst as described in Example 1 is followed, except that the t-butanol is omitted. Pure $WCl_6$ (0.21 g, 0.53 mmole) is mixed with 5.3 ml toluene to give a 0.1 M solution. Next, 0.32 ml of a 2.0 M toluene solution of nonylphenol and 0.11 ml acetylacetone are added to give a $WCl_6$-nonylphenolacetylacetone mole ratio of 1.0/1.2/2.0. This solution is used in an attempt to polymerize DCPD as described in Example 1. The mixture does not gel or polymerize within five minutes.

Comparison Example 3

Pure sublimed $WOCl_4$ (0.16 g, 0.47 mmole) is slurried in 4.7 ml toluene under an inert atmosphere. Nonylphenol (0.28 ml of a 2.0 M toluene solution) and acetylacetone (0.096 ml) are added to give a $WOCl_4$-nonylphenolacetylacetone mole ratio of 1.0/1.2/2.0. This solution is used in an attempt to polymerize DCPD as described in Example 1. The mixture does not gel or polymerize within five minutes.

Comparision Example 4

To demonstrate that the $WCl_6$/$WOCl_4$ mixture must be present before addition of other components such as a phenol or acetylacetone, a 3/1 mixture of the catalysts described in Examples 2 and 3 was made. In an attempted DCPD polymerization, no gellation or polymerization was observed within five minutes. This indicates that the synergistic reaction is between $WCl_6$ and $WOCl_4$, not between their products with phenol and acac.

Example 5

Various catalyst solutions containing different amounts of t-butanol are prepared as follows. A quantity of $WCl_6$ is weighed into a vessel under an inert atmosphere. The appropriate amount of toluene is added to make a 0.5 M solution. Next is added the appropriate amount of t-BuOH to give a range of compositions, as given in the Table below. One equivalent each of nonylphenol and acetylacetone are added, and the by-

product HCl is removed by sparging. The catalyst solutions are then used to polymerize DCPD as described in Example 1. The results of the polymerizations are tabulated below.

| Moles t-BuOH / Moles $WCl_6$ | Exotherm (dec C) | Cure Time (seconds) |
|---|---|---|
| 0.25 | 172 | 25 |
| 0.25 | 175 | 25 |
| 0.50 | 162 | 40 |
| 0.50 | 157 | 40 |
| 0.75 | 145 | 210 |
| 0.75 | 138 | 210 |

This indicates that fastest cure times and highest exotherms, indicative of more active catalyst, are obtained with the preferred 0.25/l ratio, but that catalysts with some activity are obtained by adding higher amounts of t-butanol.

Example 6

To demonstrate that the preferred order of addition is t-butanol before nonylphenol, Example 5 was repeated with nonylphenol added before the t-butanol. Polymerization results are tabulated below.

| Moles t-BuOH / Moles $WCl_6$ | Exotherm (dec C) | Cure Time (seconds) |
|---|---|---|
| 0.25 | 151 | 40 |
| 0.50 | 134 | 30 |
| 0.50 | 143 | 30 |
| 0.75 | 132 | 20 |
| 0.75 | 137 | 25 |

The exotherms are in general below the accepted minimum of 155 deg C, indicating that although the cure is fast, it is incomplete.

Example 7

A vessel is charged with 1.0 g $WCl_6$ (2.5 mmole) and 0.17 g $WOCl_4$ (0.5 mmole), giving a $WCl_6/WOCl_4$ mole ratio of 83/17. Under an inert atmosphere, 6 ml toluene is added to give a 0.5 M solution. To this is added 1.8 ml of a 2.0 M toluene solution of nonylphenol and 0.61 ml acetylacetone to give a tungsten/nonylphenol/acetylacetone mole ratio of 1.0/1.2/2.0. After sparging the remove byproduct HCl, the catalyst is used in a DCPD polymerization as described in Example 1. The cure time for the polymerization is 40 seconds, and the exotherm is 171 deg. C.

This example shows that the result of mixing solid $WOCl_4$ and $WCl_6$ is the same as adding t-BuOH to $WCl_6$.

Example 8

A vessel is charged with 9 microliters distilled water and 0.5 ml toluene. By means of a cannula, dry nitrogen gas is passed through this mixture where it causes the water and toluene to volatilize. These vapors are carried into a vessel containing 10.0 ml of a 0.1 M toluene solution of $WCl_6$. Nitrogen flow is continued until all of the water/toluene mixture has evaporated. The toluene is not necessary, but helps to minimize evaporation of the tungsten solution by saturating the carrier gas with toluene vapor. Next, 0.5 ml of a 2.0 M phenol solution in toluene (one equivalent) and 0.1 ml acetylacetone (one equivalent) are added. After sparging to remove HCl, the catalyst is used to polymerize DCPD as in Example 1. The activator is diethylaluminum chloride moderated with di-n-butyl ether. The mixture cures in 5 seconds with an exotherm of 157°C.

Example 9

An inverted vessel is charged with 0.020 g of finely ground $FeSO_4.7H_2O$ (0.07 mmole). To this is added 10.0 ml of a 0.1 M toluene solution of $WCl_6$ (1.0 mmole). The ratio of $H_2O$ to $WCl_6$ is 0.5. The mixture is stirred several hours. Next, 0.5 ml of a 2.0 M toluene solution of phenol is added (one equivalent). After sparging to remove byproduct HCl, 0.1 ml acetylacetone (1 equivalent) is added. The solution is sparged and decanted from the residual iron salt. Polymerizations of DCPD are done using the procedure described in Example 1. The activator solution is in this case diethylaluminum chloride moderated with di-n-butyl ether. The DCPD cures in 10 to 15 seconds with an exotherm ranging from 151 to 159 deg. C. Repeating the procedure with $Cu(NO_3)_2.3H_2O$ gives similar results.

**Claims**

1. A process for preparing a catalyst composition containing $WCl_6$ and suitable for use in the bulk polymerization of norbornene-type cycloolefins, is characterized in that $WCl_6$ is reacted with a controlled and limited proportion of oxygen form an oxygen donor to form a mixture comprising $WOCl_4$ and $WCl_6$ in a molar ratio of $WOCl_4$ to $WCl_6$ of form 1:9 to 2:1, the amount of the oxygen donor being insufficient to promote substantial formation of $WO_2Cl_2$ or $WO_3$.

2. A process for preparing a catalyst composition as claimed in claim 1, further characterized in that the oxygen donor is t-butanol, a mixture of carrier gas and water vapor, a hydrated inorganic salt or a wet molecular sieve.

3. A process for preparing a catalyst composition as claimed in claim 1 or 2, further characterized in that the proportion of oxygen donor is from 0.1 to 0.5 mole of oxygen per mole of tungsten.

4. A process for preparing a catalyst composition as claimed in claim 3, further characterized in that the proportion of oxygen donor is about 0.25 mole.

5. A catalyst composition containing $WCl_6$ for use in the bulk polymerization of norbornene-type cycloolefins, is characterized in that it comprises $WOCl_4$ and $WCl_6$ in a molar ratio of $WOCl_4$ to $WCl_6$ of from 1:9 to 2:1.

**Patentansprüche**

1. Verfahren zur Herstellung einer Katalysatorzusammensetzung, enthaltend $WCl_6$ und geeignet zur Verwendung bei der Polymerisation in Masse von cycloolefinen des Norbornen-typs, dadurch gekennzeichnet, daß $WCl_6$ mit einem geregelten und begrenzten Anteil an Sauerstoff von einem Sauerstoffdonator umgesetzt wird, um eine Mischung umfassend $WOCl_4$ und $WCl_6$ in einem molaren Verhältnis von $WOCl_4$ zu $WCl_6$ von 1:9 bis 2:1 zu bilden, wobei die Menge des Sauerstoffdonators nicht ausreichend ist, um wesentliche Bildung von $WO_2Cl_2$ oder $WO_3$ zu fördern.

2. Verfahren zur Herstellung einer Katalysatorzusammensetzung nach Anspruch 1, weiterhin dadurch gekennzeichnet, daß der Sauerstoffdonator t-Butanol, eine Mischung von Trägergas und Wasserdampf, ein hydratisiertes anorganisches Salz oder ein feuchtes Molekularsieb ist.

3. Verfahren zur Herstellung einer Katalysatorzusammensetzung nach Anspruch 1 oder 2, weiterhin dadurch gekennzeichnet, daß der Anteil des Sauerstoffdonators von 0,1 bis 0,5 Mol Sauerstoff pro Mol Wolfram ist.

4. Verfahren zur Herstellung einer Katalysatorzusammensetzung nach Anspruch 3, weiterhin dadurch gekennzeichnet, daß der Anteil des Sauerstoffdonators etwa 0,25 Mol ist.

5. Katalysatorzusammensetzung enthaltend $WCl_6$ zur Verwendung bei der Polymerisation in Masse von Cycloolefinen des Norbornen-Typs, dadurch gekennzeichnet, daß sie $WOCl_4$ und $WCl_6$ in einem molaren Verhältnis von $WOCl_4$ zu $WCl_6$ von 1:9 bis 2:1 umfaßt.

**Revendications**

1. Procédé de préparation d'une composition de catalyseur contenant $WCl_6$ et convenant pour la polymérisation en masse de cyclo-oléfines du type norbornène, caractérisé en ce que $WCl_6$ est mis en réaction avec une proportion contrôlée et limitée d'oxygène provenant d'un donneur d'oxygène, pour former un mélange comprenant $WOCl_4$ et $WCl_6$ dans un rapport molaire du $WOCl_4$ au $WCl_6$ de 1:9 à 2:1, la quantité du donneur d'oxygène étant insuffisante pour produire une formation notable de $WO_2Cl_2$ ou de $WO_3$.

2. Procédé de préparation d'une composition de catalyseur selon la revendication 1, caractérisé en outre en ce que le donneur d'oxygène est le t-butanol, un mélange de véhicule gazeux et de vapeur d'eau, un sel inorganique hydraté ou un tamis moléculaire humide.

3. Procédé de préparation d'une composition de catalyseur selon la revendication 1 ou 2, caractérisé en outre en ce que la proportion de donneur d'oxygène est comprise entre 0,1 et 0,5 mol d'oxygène par mol de tungstène.

4. Procédé de préparation d'une composition de catalyseur selon la revendication 3, caractérisé en outre en ce que la proportion de donneur d'oxygène est d'environ 0,25 mol.

5. Composition de catalyseur contenant $WCl_6$, utilisable dans la polymérisation en masse de cyclooléfines du type norbornène, caractérisé en ce qu'elle comprend $WOCl_4$ et $WCl_6$ dans un rapport molaire du $WOCl_4$ au $WCl_6$ de 1:9 à 2:1.